# EUROPÄISCHE PATENTSCHRIFT

(11) **EP 3 551 412 B1**
(45) Veröffentlichungstag und Bekanntmachung des Hinweises auf die Patenterteilung: **01.09.2021**
(21) Anmeldenummer: 17822181.8
(22) Anmeldetag: 06.12.2017
(51) Int. Cl.: B29C 43/42, B29C 33/54, B29C 33/52, B29C 70/30, B33Y 80/00, B29K 105/08, B29K 105/12

(54) **VERLORENER FORMKERN SOWIE EIN VERFAHREN ZUR HERSTELLUNG EINES BAUTEILS**
DISPOSABLE MOLD CORE, METHOD FOR PRODUCING A COMPONENT
NOYAU DE MOULE PERDU ET PROCÉDÉ DE FABRICATION D'UN COMPOSANT

(30) Priorität: 12.12.2016 DE 102016124061
(43) Veröffentlichungstag der Anmeldung: 16.10.2019
(73) Patentinhaber: KTM E-Technologies GmbH, 5081 Salzburg/Anif (AT)
(72) Erfinder: LOCHNER, Hans, 83486 Ramsau (DE); MARTIN, Peter, 83416 Saaldorf-Surheim (DE)
(74) Vertreter: Canzler & Bergmeier Patentanwälte Partnerschaft mbB
(86) Internationale Anmeldenummer: PCT/EP2017/081720
(87) Internationale Veröffentlichungsnummer: WO 2018/108674

(56) Entgegenhaltungen:
- EP-A1- 2 145 751
- EP-A1- 2 335 899
- DE-A1-102014 118 577
- DE-A1-102015 209 762
- JP-A- H03 270 912

## Beschreibung

Die vorliegende Erfindung betrifft einen verlorenen Formkern zur Herstellung eines faserverstärkten Bauteils, mit einem harten Stützkern, der aus einem Granulat, insbesondere einem mineralischen Grundstoff, Glas, Keramik und/oder Sand, und einem Bindemittel hergestellt ist. Des Weiteren betrifft die Erfindung ein Verfahren zur Herstellung eines faserverstärkten Bauteils, bei welchem Verstärkungsfasern, insbesondere als Gewebe, Gelege und/oder Geflecht, zusammen mit einer Matrix auf einem verlorenen Formkern angeordnet werden und die Matrix in einem Formwerkzeug mittels einer Temperaturerhöhung und/oder einer Druckerhöhung ausgehärtet wird.

Aus dem allgemeinen Stand der Technik sind ausspülbare Formkerne für die Herstellung von faserverstärkten Bauteilen bekannt. Nachteilig bei derartigen Formkernen ist es, dass die Herstellung des Formkerns sowie die Herstellung des Bauteils selbst kostenintensiv sind.

In der DE 10 2015 209 762 A1 ist ein Verfahren zur Herstellung von SMC-Hohlbauteilen offenbart, wobei ein Kernsystem auswaschbar ist.

EP 2 145 751 A1 offenbart ein Verfahren zur Herstellung eines Hohlkörpers aus Faserverbundkunststoff auf einem wasserlöslichen Kern.

Aufgabe der vorliegenden Erfindung ist es somit, einen verlorenen Formkern zu schaffen, der selbst bzw. das damit gefertigte Bauteil kostengünstig hergestellt werden kann.

Die Aufgabe wird gelöst durch verlorene Formkerne zur Herstellung von Bauteilen, deren Herstellungsverfahren und einem Bauteil gemäß den Merkmalen der unabhängigen Patentansprüche.

Vorgeschlagen wird ein verlorener Formkern zur Herstellung eines faserverstärkten Bauteils, mit einem harten Stützkern, der aus einem Granulat und einem Bindemittel hergestellt ist. Das Granulat kann ein mineralischer Grundstoff, Glas, Keramik und/oder Sand sein. Das Bauteil kann beispielsweise auch ein Strukturhohlbauteil sein.

Erfindungsgemäß weist der Stützkern eine durch das Bindemittel und das Granulat ausgebildete harte Schale auf. Durch die harte Schale ist eine Stabilität des Formkerns gegeben, sodass auf die Schale zur Herstellung des Bauteils Verstärkungsfasern aufgelegt werden können.

Außerdem weist der Stützkern einen durch das Granulat ausgebildeten bindemittelfreien inneren Kern auf. Dieser ist im Vergleich zur Schale nach der Herstellung des faserverstärkten Bauteils schneller und/oder leichter auslösbar. Beispielsweise kann der Kern aus der Schale herausgeschüttet werden. Das Granulat ist demnach vorzugsweise rieselfähig. Dadurch kann das Granulat auf einfache Weise aus dem Bauteil entfernt werden, so dass die Herstellungskosten reduziert werden können. Wenn das Granulat aufgrund des hohen Drucks aneinander haftet, muss dieses zunächst aufgelockert werden, was beispielsweise mit einer Flüssigkeit und/oder mechanisch erfolgen kann.

In einer vorteilhaften Weiterbildung der Erfindung ist das Granulat des inneren Kerns lose. Zusätzlich oder alternativ kann das Granulat des inneren Kerns auch komprimiert sein und/oder aneinanderhaften. Dadurch liegen die einzelnen Granulatkörner eng aneinander an. Dadurch kann das Granulat im inneren des Kerns Druckkräfte aufnehmen, die beispielsweise dann ausgebildet sind, wenn auf den Formkern die Verstärkungsfasern mit der Matrix aufgelegt werden oder wenn das Bauteil hergestellt wird. Dadurch ist eine Verformung des Formkerns verhindert, so dass auch das Bauteil ohne Verformungen hergestellt wird.

Ebenfalls ist es von Vorteil, wenn der Stützkern in einem Rapid-Prototyping-Verfahren hergestellt wird. Dabei kann der Stützkern beispielsweise gedruckt werden. Das Rapid-Prototyping-Verfahren stellt dabei ein kostengünstiges und schnelles Verfahren zur Herstellung des Stützkerns dar.

Auch ist es von Vorteil, wenn eine Konzentration des Bindemittels von einer Außenfläche des Stützkerns in Richtung seines Inneren abnimmt. Dabei kann die Konzentration auch zu einer Querschnittsmitte abnehmen. Außerdem kann die Konzentration linear, parabolisch und/oder exponentiell abnehmen. Die Konzentration kann dabei von beispielsweise 100% an der Außenfläche bis auf 0% im Inneren abnehmen.

Vorteilhaft ist es des Weiteren, wenn die Schale eine Dicke von weniger als 5 mm aufweist. Die Schale kann aber auch eine Dicke von weniger als 2 mm aufweisen. Dadurch ist auf der einen Seite die Stabilität der Schale gegeben. Andererseits ist damit möglichst viel Granulat im Kern bindemittelfrei, so dass besonders viel Granulat nach der Herstellung des Bauteils herausgeschüttet werden kann.

Dabei ist es auch vorteilhaft, wenn die Schale eine Dicke von 3% bis 10% des jeweiligen Durchmessers an der dazugehörigen Stelle des Formkerns aufweist. Dadurch kann Bindemittel eingespart werden um Kosten zu sparen, wobei die Stabilität des Formkerns weiterhin gegeben ist.

Auch ist es vorteilhaft, wenn die Schale eine Trennschicht aufweist, die den Stützkern nach außen versiegelt. Dabei kann die Trennschicht elastisch sein und zusätzlich oder alternativ mittels einer Silikon- und/oder Kunststoffschicht ausgebildet sein. Dadurch kann ein Eindiffundieren der Matrix während der Herstellung des Bauteils verhindert werden. Die Matrix wird während der Herstellung des Bauteils zusammen mit Verstärkungsfasern auf den Formkern aufgebracht, wobei sich die Matrix mit den Verstärkungsfasern unter Druck- und/oder Temperaturerhöhung zum Bauteil verbindet. Durch die Trennschicht wird die Matrix daran gehindert, zumindest teilweise in den Formkern einzudiffundieren. Das Eindiffundieren ist nachteilig, da sich sonst die Matrix mit dem Granulat verbindet und das Granulat daraufhin nur schlecht aus dem Bauteil entfernt werden kann.

Ferner ist es vorteilhaft, wenn das Bindemittel mittels eines Lösungsmittels löslich ist, so dass es nach der Herstellung des faserverstärkten Bauteils aus diesem ausspülbar ist. Zusätzlich oder alternativ kann auch die Trennschicht löslich sein. Das Lösungsmittel kann beispielsweise eine Säure, eine Base, Wasser und/oder einen Alkohol umfassen. Dadurch kann auch das Bindemittel und/oder die Trennschicht leicht aus dem Bauteil ausgespült werden.

Des Weiteren ist es von Vorteil, wenn die Schale zumindest einen Öffnungsbereich aufweist, in dem die Schale zur Ausbildung einer Öffnung aufbrechbar ist. Die Schale kann auch von vorneherein die Öffnung aufweisen. Durch die Öffnung kann der lose Kern nach der Herstellung des faserverstärkten Bauteils herausrieseln. Die Öffnung kann dabei beispielsweise an einer Stirnseite des Formkerns angeordnet sein. Durch die Öffnung kann das Granulat und/oder die Schale besonders einfach entfernt bzw. ausgespült werden.

Ferner wird ein Verfahren zur Herstellung eines faserverstärkten Bauteils vorgeschlagen. Dabei werden zum Ausbilden eines faserverstärkten Bauteils Verstärkungsfasern zusammen mit einer Matrix um einen verlorenen Formkern angeordnet. Die Verstärkungsfasern können ein Gewebe, ein Gelege und/oder ein Geflecht umfassen. Die Matrix wird dann in einem Formwerkzeug mittels einer Temperatur- und/oder Druckerhöhung ausgehärtet.

Es wird nach dem Härten der Matrix und noch während sich der Formkern im Inneren des Bauteils befindet auf einer Außenfläche des Bauteils unter Druck zumindest ein Verstärkungselement aufgepresst. Erst anschließend wird der verlorene Formkern zumindest teilweise aus dem Bauteil entfernt. Wenn sich der Formkern noch im Bauteil befindet, trägt er zur Stabilisierung des Bauteils bei, so dass das Verstärkungselement aufgepresst werden kann, ohne dass sich das Bauteil verformt. Alternative Ausführungen des Verfahrens zur Herstellung des faserverstärkten Bauteils mit dem Aufpressen des zumindest einen Verstärkungselements sowie des entsprechenden faserverstärkten Bauteils mit dem Verstärkungselement und den entsprechenden Weiterbildungen gemäß dieser Beschreibung gehören nicht zur Erfindung.

Es wird ein Formkern gemäß einem oder mehreren Merkmalen der vorangegangenen und/oder nachfolgenden Beschreibung verwendet, wobei die genannten Merkmale einzeln oder in beliebiger Kombination vorhanden sein können. Außerdem umfasst der Formkern eine harte Schale und einen bindemittelfreien und/oder losen Kern. Der Kern wird nach der Herstellung des faserverstärkten Bauteils aus der Schale entfernt, insbesondere herausgespült und/oder herausgeschüttet. Da der Kern bindemittelfrei und/oder lose ausgebildet ist, kann dieser auf einfache Weise aus dem Bauteil entfernt werden. Wenn das Granulat aufgrund des hohen Drucks aneinander haftet, muss dieses zunächst aufgelockert werden, was beispielsweise mit einer Flüssigkeit und/oder mechanisch erfolgen kann.

In einer vorteilhaften Weiterbildung der Erfindung wird auch die Schale, insbesondere nach dem Entfernen des Kerns, mittels eines Lösungsmittels ausgespült. Nach dem Herausschütten des Kerns ist nur noch die Schale im Bauteil angeordnet, die nun eine große Angriffsfläche für das Lösungsmittel bietet. Das Lösungsmittel kann somit die Schale besonders schnell auflösen. Durch einfaches Ausschütten kann damit die gelöste Schale ebenfalls und aus dem Bauteil entfernt werden. Alternativ kann die Schale aber auch in dem Bauteil verbleiben.

Ebenso ist es von Vorteil, wenn das Verstärkungselement zusammen mit den Verstärkungsfasern und der Matrix um den verlorenen Formkern angeordnet wird. Die Matrix kann dabei noch unausgehärtet sein. Zusätzlich oder alternativ kann das Verstärkungselement eine unausgehärtete Pressmasse umfasst. Beispielsweise kann die Pressmasse C-SMC (C-Sheet-Molding-Compound) umfassen. Erst in einem anschließenden Schritt kann die Matrix zusammen mit dem Verstärkungselement bzw. der Pressmasse ausgehärtet werden. Dadurch kann sich während des Aushärtens das Verstärkungselement stoffschlüssig mit der Matrix und dadurch mit den Verstärkungsfasern verbinden. Das Verstärkungselement und die Matrix mit Verstärkungsfasern weisen dadurch eine stabile, insbesondere stoffschlüssige, Verbindung auf.

Ebenso ist es vorteilhaft, wenn das Verstärkungselement auf die angehärtete Matrix aufgepresst wird. Dabei kann die Matrix auch vollständig ausgehärtet sein. Dadurch weist das Bauteil bereits eine gewisse Stabilität auf, so dass das Verstärkungselement ohne Beschädigung auf das Bauteil aufgepresst werden kann. Das Verstärkungselement kann eine Pressmasse, beispielsweise C-SMC (C-Sheet-Molding-Compound) sein.

Vorgeschlagen wird ferner ein faserverstärktes Bauteil mit einem zumindest teilweise aus Verstärkungsfasern und einer ausgehärteten Matrix ausgebildeten Grundkörper. Das Bauteil kann beispielsweise ein Hinterschnitt- und/oder ein Hohlbauteil sein. Die Verstärkungsfasern können dabei ein Gewebe, ein Gelege und/oder ein Geflecht bilden.

Es ist das Bauteil nach einem oder mehreren Verfahrensmerkmalen der vorangegangenen und/oder nachfolgenden Beschreibung hergestellt. Des Weiteren weist der Grundkörper auf seiner Außenfläche zumindest ein stoffschlüssig mit diesem verbundenes Verstärkungselement auf. Durch das Verstärkungselement wird eine Stabilität bzw. eine Steifigkeit des Bauteils erhöht.

Zusätzlich oder alternativ ist das Bauteil als Hybridbauteil ausgebildet, wobei ein Teil des Grundkörpers aus einer Pressmasse hergestellt ist, die eine ausgehärtete Matrix mit losen Verstärkungsfasern umfasst. Zusätzlich oder alternativ kann auch das Verstärkungselement aus der Pressmasse ausgebildet sein. Die Pressmasse kann dabei auf einfache Weise auf das Bauteil aufgepresst werden. Außerdem ist das Bauteil einfach zumindest teilweise aus der Pressmasse herstellbar.

In einer vorteilhaften Weiterbildung umfasst das Verstärkungselement Verstärkungsrippen und/oder eine Verstärkungsstruktur. Die Verstärkungsrippen können einfach und kostengünstig hergestellt werden. Die Verstärkungsstruktur verleiht dem Bauteil eine hohe Stabilität.

Zusätzlich oder alternativ ist es von Vorteil, wenn das Verstärkungselement aus einem Faserverbundwerkstoff und/oder einem Metall ausgebildet ist. Dabei umfasst der Faserverbundwerkstoff Verstärkungsfaser und eine Matrix. Der Faserverbundwerkstoff kann beispielsweise aus einer gleichen Verstärkungsfaser/Matrix-Mischung ausgebildet sein wie das Bauteil. Der Faserverbundwerkstoff weist somit im Wesentlichen die gleichen Eigenschaften, beispielsweise die gleiche Temperaturausdehnung, wie das Bauteil auf. Dadurch werden beispielsweise Spannungen, die durch eine unterschiedliche Temperaturausdehnung auftreten, zwischen dem Bauteil und dem Verstärkungselement verringert. Der Faserverbundwerkstoff kann auch ein C-SMC (C-Sheet-Molding-Compound) umfassen und kann die Pressmasse bilden. Die Pressmasse kann dabei besonders einfach auf die Außenfläche aufgebracht werden und ist kostengünstig.

Außerdem ist es von Vorteil, wenn zwischen der Matrix und dem Verstärkungselement eine stoffschlüssige Verbindung ausgebildet ist. Dabei kann das Verstärkungselement eine Pressmasse, insbesondere aus C-SMC, umfassen. Mittels der stoffschlüssigen Verbindung ist eine hohe Festigkeit zwischen dem Bauteil und dem Verstärkungselement gegeben.

Ferner ist es vorteilhaft, wenn in und/oder an dem Verstärkungselement zumindest ein Befestigungsmittel, beispielsweise ein Gewindeeinsatz, eine Hülse, ein Haken und/oder eine Bohrung angeordnet ist. Dadurch kann das Befestigungsmittel mit dem Verstärkungselement an dem Bauteil angeordnet werden. Eine Nachbearbeitung des Bauteils, um das Befestigungsmittel daran anzuordnen, entfällt dabei.

Vorgeschlagen wird ein verlorener Formkern zur Herstellung eines faserverstärkten Bauteils mit zumindest zwei Segmenten. Die zumindest zwei Segmente sind nach der Herstellung des Bauteils aus diesem mittels eines Lösungsmittels ausspülbar. Nach der Herstellung des Bauteils wird der Formkern zur Verringerung des Gewichts des Bauteils aus diesem entfernt. Ferner kann der Formkern ein oder mehrere Merkmale der vorangegangenen und/oder nachfolgenden Beschreibung aufweisen.

Es umfasst der verlorene Formkern zumindest ein zwischen den beiden Segmenten angeordnetes elastisches und/oder flexibles Ausgleichselement. Das Ausgleichselement verbindet die beiden Segmente derart relativbeweglich miteinander, dass ein translatorischer und/oder rotatorischer Versatz zwischen den beiden Segmenten ausgleichbar ist. Durch das Ausgleichselement können Maßungenauigkeiten des Formkerns bzw. der Segmente, die zu dem translatorischen und/oder dem rotatorischen Versatz führen, ausgeglichen werden. Tritt beispielsweise der rotatorische Versatz zwischen den beiden Segmenten auf, können mittels des elastischen und/oder flexiblen Ausgleichselements die beiden Segmente gegeneinander verdreht werden, so dass dieser rotatorische Versatz ausgeglichen ist. Das Ausgleichselement wird dabei in Bereichen gedehnt und/oder gestaucht, wobei es die beiden Segmente weiterhin verbindet. Tritt dagegen der translatorische Versatz auf, beispielsweise wenn ein Abstand zwischen den Segmenten zu groß ist, kann das Ausgleichselement gestaucht werden, so dass der Abstand entsprechend verringert wird, wobei es die Segmente weiterhin verbindet. Alternative Ausführungen des Formkerns zur Herstellung des faserverstärkten Bauteils mit dem elastischen und/oder flexiblen Ausgleichselement zwischen den beiden Segmenten und den entsprechenden Weiterbildungen gemäß dieser Beschreibung gehören nicht zur Erfindung. Zur Erfindung gehört auch nicht das folgende Verfahren zum Herstellen des Formkerns aus mindestens zwei Segmenten mit dem elastischen und/oder flexiblen Ausgleichselement.

In einer vorteilhaften Weiterbildung ist das Ausgleichselement in einem Verbindungsbereich des jeweiligen Segments stoff- und/oder formschlüssig mit diesem verbunden. Die stoffschlüssige Verbindung ist einfach auszubilden. Die formschlüssige Verbindung ist besonders sicher. Der Verbindungsbereich kann dabei stirnseitig an dem jeweiligen Segment angeordnet sein.

Ebenfalls ist es von Vorteil, wenn die beiden miteinander korrespondierenden Segmente mit ihren Verbindungsbereichen formschlüssig ineinandergreifen. Diese können beispielsweise derart ineinandergreifen, dass zwischen diesen eine Gelenkverbindung ausgebildet ist. Die Gelenkverbindung kann auch als ein Scharnier- und/oder ein Kugelgelenk ausgebildet sein. Beispielsweise kann mit dem Kugelgelenk ein rotatorischer Versatz besonders einfach ausgeglichen werden, da es eine den rotatorischen Versatz ausgleichende Drehung um drei orthogonal zueinander stehende Rotationsachsen (in einem kartesischen Koordinatensystem können das die x, y und z-Achse sein) zulässt. Das Kugelgelenk kann dazu an einem Segment eine Kugelpfanne und an dem korrespondierenden Segment einen entsprechenden Kugelkopf aufweisen, wobei der Kugelkopf drehbar in der Kugelpfanne angeordnet ist.

Vorteilhaft ist es auch, wenn das Ausgleichselement aus einem Elastomer, einem ungehärteten Thermoplasten, einem ungehärteten Duroplasten und/oder einem im verfestigten Zustand noch elastischen und/oder flexiblen Klebstoff hergestellt ist. Die Thermoplaste können beispielsweise Polyvinylalkohole sein. Ein Elastomer weist dabei die elastischen und/oder flexiblen Eigenschaften auf.

Die ungehärteten Thermoplasten und/oder ungehärteten Duroplasten können beispielsweise dazu verwendet werden, um die beiden Segmente zu fixieren. Dazu sind während eines Zusammenfügens der beiden Segmente die Thermoplasten und/oder Duroplasten noch nicht ausgehärtet, so dass sie leicht zwischen die Segmente angeordnet werden können.

Um die beiden Segmente zu verbinden, werden die Thermoplasten beispielsweise zuerst erhitzt, zwischen die Segmente angeordnet und anschließend wieder abgekühlt. Die Thermoplasten können beispielsweise nach der Herstellung des Bauteils mittels Erhitzens wieder fleißfähig gemacht werden, um die Thermoplasten aus dem Bauteil auszuspülen. Die Thermoplasten können beispielsweise Polyvinylalkohole sein.

Die Duroplasten können ebenfalls zuerst erhitzt, zwischen die Segmente angeordnet und anschließend wieder abgekühlt werden. Duroplaste sind dabei hitzeresistenter als beispielsweise die Thermoplasten und/oder die Elastomeren.

Zusätzlich oder alternativ kann das Ausgleichselement auch aus einem im verfestigten Zustand noch elastischen und/oder flexiblen Klebstoff hergestellt sein. Der Klebstoff kann dabei beispielsweise flüssig bis zähflüssig sein, so dass er leicht zwischen den Segmenten angeordnet werden kann. Der Klebstoff verfestigt sich dann nach einer gewissen Zeit von selbst ohne zusätzliche Behandlung, wodurch die Herstellung des Formkerns vereinfacht ist.

Dabei können als Ausgleichselement auch Mischungen zwischen Elastomer, Thermoplast, Duroplast und/oder Klebstoff Anwendung finden.

Ebenfalls ist es vorteilhaft, wenn das Ausgleichselement ein Expansionsmaterial umfasst, das bei einer Temperaturerhöhung expandiert, so dass bei der Herstellung des Bauteils die beiden benachbarten Segmente auseinanderpressbar sind. Dadurch können die Segmente bei der Herstellung des Bauteils gegen eine Innenseite eines Formwerkzeugs gepresst werden. Dadurch kann eine Form des Bauteils genauer erreicht werden. Beispielsweise wird dadurch ein Spiel des Formkerns im Formwerkzeug verringert.

Dabei ist es von Vorteil, wenn das Expansionsmaterial ein Wachs, ein Silikon, ein Kunststoff, ein Fett und/oder eine niedrigschmelzende Legierung ist. Beispielsweise ist ein Wachs, ein Silikon und/oder ein Fett leicht aus dem faserverstärkten Bauteil ausspülbar.

Ferner ist es von Vorteil, wenn die Segmente einteilig ausgebildet sind, voneinander beabstandet sind und/oder in Längsrichtung des Formkerns aneinandergereiht sind. Durch die einteilige Ausbildung der Segmente können diese besonders einfach und schnell hergestellt werden. Durch die Beabstandung können sich die Segmente gegenseitig nicht verhaken. Wenn die Segmente länglich aneinander angereiht sind, sind die Verbindungsbereiche der Segmente untereinander möglichst klein gehalten. Dadurch sind Ausgleichselemente eingespart.

Vorteilhaft ist es auch, wenn die Segmente aus einem Granulat ausgebildet sind, das ein Granulat und/oder ein Bindemittel umfasst. Die Segmente können beispielsweise aus einem porösen und/oder mit Zwischenräumen aufweisenden Granulat ausgebildet sein. Dadurch kann ein Gewicht der Segmente eingespart werden. Außerdem kann das Granulat aus einem mineralischen Grundstoff, aus Glas, aus Keramik und/oder aus Sand ausgebildet sein, die einfach zu verarbeiten sind.

Des Weiteren ist es von Vorteil, wenn das Bindemittel der Segmente und/oder zumindest teilweise das Ausgleichselement, insbesondere das Expansionsmaterial, mittels eines Lösungsmittels löslich ist, so dass der Formkern nach dem Herstellen des Bauteils aus diesem ausspülbar ist. Das Lösungsmittel kann beispielsweise eine Säure, eine Base, Wasser und/oder ein Alkohol sein. Das Bindemittel, das Ausgleichselement und/oder das Expansionsmaterial können dadurch in einem einfachen Arbeitsschritt mit einem Lösungsmittel aus dem Bauteil ausgespült werden.

Vorteilhaft ist es ebenfalls, wenn der Formkern einen sich zumindest teilweise durch die Segmente und/oder das Ausgleichselemente hindurcherstreckenden Ausspülhohlraum aufweist, mittels dem ein Auslösen des Formkerns beschleunigbar ist. In den Ausspülhohlraum kann das Lösungsmittel gezielt eingebracht werden und dort zu allen Seiten die Segmente und/oder das Ausgleichselement lösen, wodurch der Formkern schneller ausgespült wird.

Vorgeschlagen wird des Weiteren ein Herstellungsverfahren für einen verlorenen Formkern zur Herstellung eines faserverstärkten Bauteils. Der Formkern kann dabei gemäß zumindest einem der vorangegangenen und/oder zumindest einem der nachfolgenden Merkmale der Beschreibung ausgebildet sein. Bei dem Herstellungsverfahren werden zumindest zwei Segmente ausgebildet. Der Formkern wird dann aus diesen Segmenten zusammengesetzt.

Es werden die Segmente zueinander ausgerichtet und anschließend mit zumindest einem elastischen und/oder flexiblen Ausgleichselement stoffschlüssig und zueinander relativbeweglich miteinander verbunden. Dadurch kann ein translatorischer und/oder ein rotatorischer Versatz zwischen den beiden Segmenten ausgeglichen werden. Eine Maßungenauigkeit bzw. eine Fertigungstoleranz des Formkerns bzw. der Segmente kann zu dem translatorischen und/oder ein rotatorischen Versatz führen, der zu einem fehlerhaften Bauteil führt. Der translatorische Versatz kann beispielsweise dadurch ausgebildet sein, dass die Segmente einen zu geringen Abstand zueinander aufweisen. Das mit einem derartigen Formkern hergestellte Bauteil würde zu geringe Maße aufweisen. Mittels des elastischen und/oder flexiblen Ausgleichselements können die beiden Segmente derart ausgerichtet und verbunden werden, dass dieser translatorische Versatz ausgeglichen wird. Das Ausgleichselement kann dazu auch gedehnt und/oder gestaucht werden um den translatorischen und/oder den rotatorischen Versatz auszugleichen, wobei es die Segmente weiterhin verbindet.

In einer vorteilhaften Weiterbildung des Herstellungsverfahrens wird der Formkern einteilig hergestellt und anschließend in die Segmente zerteilt.

Dadurch kann beispielsweise zuerst überprüft werden, ob und wie der translatorische und/oder rotatorische Versatz des Formkerns ausgebildet ist. Danach kann der Formkern in vorteilhafte Segmente zerteilt werden, so dass zum Ausgleich der Fertigungstoleranz möglichst wenige Segmente entstehen. Alternativ können die Segmente des Formkerns separat voneinander hergestellt werden. Im Gegensatz zu einem größeren Formkern können kleinere Segmente mit einer höheren Genauigkeit hergestellt werden. Dadurch wird von vornherein die Maßungenauigkeit verringert.

Der Formkern bzw. die Segmente können beispielsweise mittels eines Kernschießverfahrens und/oder eines Rapid-Prototyping-Verfahrens hergestellt werden.

Des Weiteren ist es von Vorteil, wenn zum Ausbilden des Ausgleichselements ein Ausgleichsmaterial in einen Freiraum zwischen die beiden Segmente eingebracht wird. Das Ausgleichsmaterial kann dabei eingespritzt, aufgesprüht und/oder aufgestrichen werden. Das Ausgleichsmaterial kann ferner ein chemisch härtender und/oder ein physikalisch abbindender Klebstoff sein. Ein chemisch härtender Klebstoff kann beispielsweise ein ZweiKomponenten-Klebstoff sein. Ein physikalisch abbindender Klebstoff kann beispielsweise mittels ultravioletter Strahlung aushärten.

Außerdem ist es von Vorteil, wenn das Ausgleichsmaterial zur Ausbildung des flexiblen und/oder elastischen Ausgleichselements verfestigt wird. Mittels des Ausgleichselements kann der translatorische und/oder rotatorische Versatz ausgeglichen werden.

Weitere Vorteile der Erfindung sind in den nachfolgenden Ausführungsbeispielen beschrieben. Es zeigen:
- **Figur 1a**: eine seitliche Schnittansicht eines verlorenen Formkerns mit einem rotatorischen Versatz,
- **Figur 1b**: eine seitliche Schnittansicht eines verlorenen Formkerns mit einem rotatorischen Versatz, mit zwei Segmenten und einem Ausgleichselement,
- **Figur 1c**: eine seitliche Schnittansicht eines verlorenen Formkerns mit ausgeglichenem Versatz,
- **Figur 1d**: eine seitliche Schnittansicht eines verlorenen Formkerns in einem Formwerkzeug,
- **Figur 2**: eine seitliche Schnittansicht eines Ausschnitts eines verlorenen Formkerns und mit einer Gelenkverbindung,
- **Figur 3a**: eine seitliche Schnittansicht eines verlorenen Formkerns mit einem translatorischen Versatz,
- **Figur 3b**: eine seitliche Schnittansicht eines verlorenen Formkerns mit einem ausgeglichenen translatorischen Versatz,
- **Figur 4**: eine seitliche Schnittansicht eines Bauteils mit Verstärkungselementen,
- **Figur 5**: eine seitliche Schnittansicht eines Bauteils mit Pressmasse,
- **Figur 6**: eine seitliche Schnittansicht eines Bauteils mit Verstärkungselementen und Befestigungsmitteln,
- **Figur 7**: eine seitliche Schnittansicht eines Formkerns mit einer Schale und
- **Figur 8**: eine seitliche Schnittansicht des Formkerns mit einer Trennschicht.

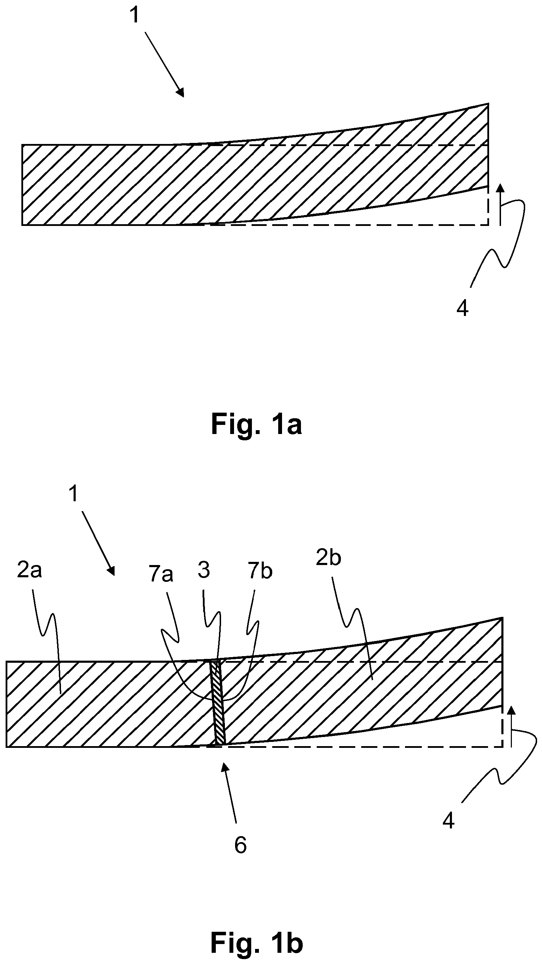

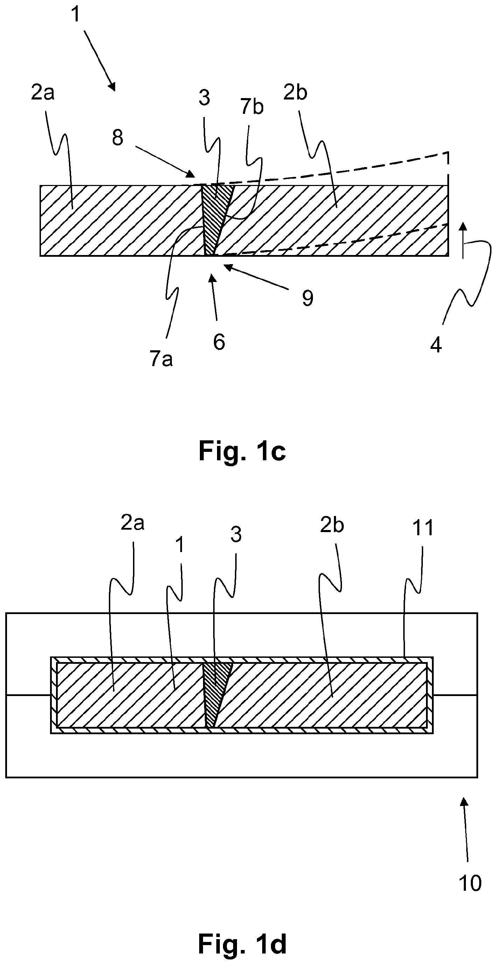

Die Merkmale der Figuren 1 - 6 bezüglich dem Ausgleichselement 3 und dem zumindest einen Verstärkungselement 16 gehören nicht zur Erfindung.

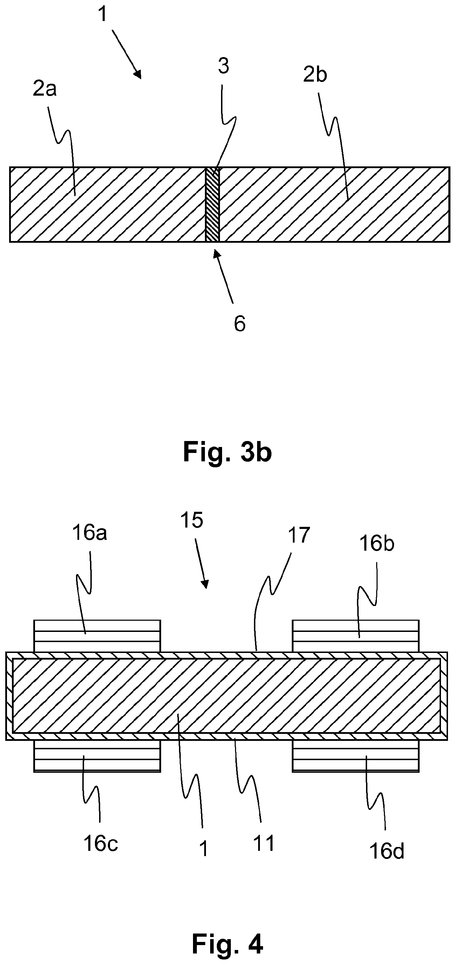

Figur 1 zeigt einen verlorenen Formkern 1 zur Herstellung eines Bauteils 15 (vgl. Figur 4) der einen rotatorischen Versatz 4 aufweist. Der Formkern 1 ist in diesem Ausführungsbeispiel verbogen bzw. weist eine Krümmung auf. Der rotatorische Versatz 4 bezeichnet dabei den Versatz, zwischen dem Formkern 1 gemäß der gestrichelten Form, wobei der Formkern 1 diese Form haben sollte, und der Form des tatsächlichen Formkerns 1 (schraffierter Formkern 1). Die Krümmung bzw. der rotatorische Versatz 4 ist hier zur besseren Veranschaulichung stark übertrieben dargestellt. Nachteilig dabei ist es, dass mit einem derartig gebogenen, gekrümmten bzw. den rotatorischen Versatz 4 aufweisenden Formkern 1 ein fehlerhaftes Bauteil 15 hergestellt wird.

In einem Aspekt umfasst der verlorene Formkern 1 der Figur 1b zwischen zwei Segmenten 2a, 2b des Formkerns 1 zumindest ein elastisches und/oder flexibles Ausgleichselement 3. Der Formkern 1 kann natürlich auch mehr Segmente 2 aufweisen. Mittels des Ausgleichselements 3 sind die beiden Segmente 2a, 2b derart relativbeweglich miteinander verbunden, dass ein translatorischer und/oder, wie hier gezeigt, ein rotatorischer Versatz 4 ausgleichbar ist.

Das Ausgleichselement 3 ist dabei in einem Verbindungsbereich 7a, 7b des jeweiligen Segments 2a, 2b angeordnet. Die Verbindungsbereiche 7a, 7b sind in diesem Ausführungsbeispiel stirnseitig an den jeweiligen Segmenten 2a, 2b angeordnet. Über das Ausgleichselement 3 ist somit die Verbindung zwischen den Segmenten 2a, 2b ausgebildet.

Der Formkern 1 kann dabei beispielsweise in die beiden Segmente 2a, 2b zerteilt worden sein. Die beiden Segmente 2a, 2b können aber auch separat hergestellt worden sein.

Das Ausgleichselement 3 kann dabei beispielsweise ein Elastomer umfassen. Dadurch ist das Ausgleichselement 3 elastisch und/oder flexibel, so dass die beiden Segmente 2a, 2b relativbeweglich zueinander sind.

Das Ausgleichselement 3 kann aber zusätzlich oder alternativ ein ungehärteter Thermoplast, wie beispielsweise ein Polyvinylalkohol, sein. Der Thermoplast wir dabei zuerst erhitzt, mittels Streichen, Spritzen und/oder Sprühen in einen Freiraum 6 (in dem Freiraum 6 ist hier bereits das Ausgleichselement 3 angeordnet) zwischen den Segmenten 2a, 2b eingebracht und wieder abgekühlt, so dass sich der Thermoplast wieder verfestigt. Ein Vorteil hiervon ist, dass die Segmente 2a, 2b zuerst ausgerichtet werden können und anschließend der erhitzte Thermoplast in den Freiraum 6 eingebracht wird. Wenn der Thermoplast noch erhitzt ist, können die Segmente 2a, 2b ebenfalls noch zueinander ausgerichtet werden, um einen translatorischen und/oder rotatorischen Versatz 4 auszugleichen. Nach dem Abkühlen ist der Thermoplast fest, so dass die Segmente 2a, 2b zueinander fixiert sind. Außerdem kann der Thermoplast durch weiteres Erhitzen wieder verflüssigt werden, so dass die Segmente 2a, 2b erneut ausgerichtet werden können und/oder der Thermoplast nach der Herstellung des Bauteils 15 aus diesem ausgespült werden kann.

Das Ausgleichselement 3 kann auch ein ungehärteter Duroplast sein. Dieser wird wie der Thermoplast in den Freiraum 6 eingebracht. Außerdem können die Segmente 2a, 2b wie beim Thermoplast ausgerichtet werden und mittels des Duroplasts fixiert werden.

Zusätzlich oder alternativ kann das Ausgleichselement 3 auch ein im verfestigten Zustand noch elastischer und/oder flexibler Klebstoff sein. Damit können die beiden Segmente 2a, 2b besonders einfach verbunden werden. Der Klebstoff kann auf die Verbindungsbereiche 7a, 7b aufgestrichen, aufgesprüht und/oder aufgespritzt werden. Anschließend können die beiden Segmente 2a, 2b zusammengefügt werden, wobei der Klebstoff selbstständig aushärtet.

Das Ausgleichselement 3 kann zusätzlich oder alternativ auch ein Expansionsmaterial umfassen, das bei einer Temperaturerhöhung expandiert. Durch die Expansion während der Herstellung des Bauteils 15 werden die beiden Segmente 2a, 2b in deren axialer Richtung auseinander gepresst. Die Expansion presst dabei den Formkern 1 an eine Innenseite eines Formwerkzeugs 10 (vgl. Fig. 1d), so dass zwischen dem Formkern und dem Formwerkzeug 10 angeordnete Verstärkungsfasern 11 an die Innenseite des Formwerkzeugs 10 gedrückt werden. Das Bauteil 15 nimmt dadurch eine Innenform des Formwerkzeugs 10 an. Dadurch kann aber beispielsweise auch ein Spiel zwischen dem Formkern 1 und dem Formwerkzeug 10 verringert werden.

Figur 1c zeigt den verlorenen Formkern 1 aus der Figur 1b, wobei der rotatorische Versatz 4 des Formkerns 1 aus Figur 1b ausgeglichen ist. Dazu ist zwischen den beiden Segmenten 2a, 2b das elastische und/oder flexible Ausgleichselement 3 angeordnet. Die beiden Segmente 2a, 2b sind außerdem relativ zueinander bewegt (im Vergleich zur Figur 1b oder der hier gezeigten gestrichelten Kontur), so dass der rotatorische Versatz 4 ausgeglichen ist. Das Ausgleichselement 3 ist dabei in einem Dehnungsbereich 8 gedehnt. Das Ausgleichselement 3 kann beispielsweise weiterhin einen Stauchungsbereich 9 aufweisen, in dem das Ausgleichselement 3 zusammengedrückt ist. Das Ausgleichselement 3 verbindet dabei weiterhin die beiden Segmente 2a, 2b.

Figur 1d zeigt den verlorenen Formkern 1 in einem Formwerkzeug 10. Dabei sind die Segmente 2a, 2b mittels des Ausgleichselements 3 relativbeweglich zusammengefügt. Außerdem ist der rotatorische Versatz 4 (vgl. Figur 1a-1b) ausgeglichen, um Maßungenauigkeiten bzw. Fehlertoleranzen auszugleichen. Zwischen dem Formkern 1 und dem Formwerkzeug 10 sind Verstärkungsfasern 11 angeordnet. Die Verstärkungsfasern 11 können mit einer Matrix getränkt sein, die durch eine Temperatur- und/oder Druckerhöhung aushärtet, so dass das Bauteil 15 gebildet wird. Die Matrix kann aber auch erst während der Erhöhung der Temperatur und/oder des Drucks eingebracht werden. Nach einer Abkühlungsphase des Bauteils 15 hat sich die Matrix verfestigt und mit den Verstärkungsfasern 11 einen Verbund gebildet. Das Bauteil 15 kann daraufhin aus dem Formwerkzeug 10 entnommen werden.

Um Gewicht des faserverstärkten Bauteils 15 einzusparen, kann der Formkern 1 aus dem Bauteil 15 ausgespült werden. Dazu wird durch eine hier nicht gezeigte Öffnung ein Lösungsmittel in das Bauteil 15 eingebracht, so dass die Segmente 2a, 2b und das Ausgleichselement 3 gelöst und anschließend ausgespült werden können.

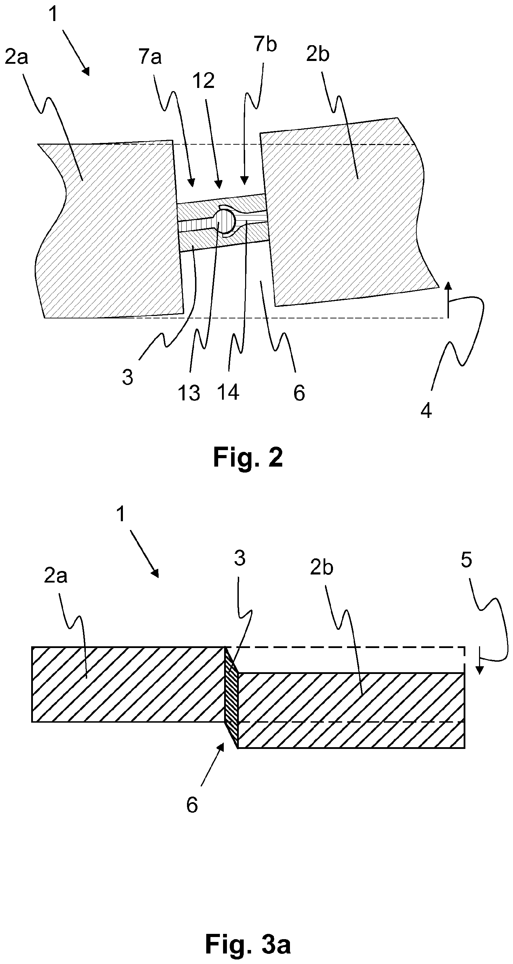

Figur 2 zeigt eine seitliche Schnittansicht eines Ausschnitts eines verlorenen Formkerns 1 gemäß einem alternativen Ausführungsbeispiels. Zwischen den Segmenten 2a, 2b ist wieder das elastische und/oder flexible Ausgleichselement 3 angeordnet, das die beiden Segmente 2a, 2b stoffschlüssig verbindet. Das Ausgleichselement 3 ist dabei wieder in dem Freiraum 6 zwischen den Segmenten 2a, 2b angeordnet. Der Formkern 1 weist wie die Figuren 1a und 1b einen rotatorischen Versatz 4 auf. Die gestrichelten Linien sollen den Formkern 1 ohne Versatz andeuten (wie in den Figuren 1a-1b).

In diesem alternativen Ausführungsbeispiel ist zwischen den beiden Segmenten 2a, 2b eine Gelenkverbindung 12 angeordnet, die die beiden Segmente 2a, 2b formschlüssig verbindet. Die Gelenkverbindung 12 ist zweiteilig ausgeführt, wobei ein Kugelkopf 13 an dem Segment 2a und eine Kugelpfanne 14 an dem Segment 2b angeordnet ist. Der Kugelkopf 13 ist dabei in der Kugelpfanne 14 gelagert, so dass die beiden gegeneinander verdrehbar sind. Dadurch kann der rotatorische Versatz 4 zwischen den beiden Segmenten 2a, 2b ausgeglichen werden. Der Kugelkopf 13 ist dabei der Verbindungsbereich 7a des Segments 2a und die Kugelpfanne 14 der Verbindungsbereich 7b des Segments 2b.

Die Gelenkverbindung 12 ist von dem Ausgleichselement 3 umgeben, so dass die Gelenkverbindung 12 eine Elastizität erhält. Dadurch erhält die Gelenkverbindung 12 ebenfalls eine gewisse Stabilität. Der Freiraum 6 kann auch vollständig mit dem Ausgleichsmaterial 3 gefüllt sein.

Figur 3a zeigt einen verlorenen Formkern 1 in einer seitlichen Schnittansicht mit einem translatorischen Versatz 5. Die beiden Segmente 2a, 2b sind somit parallel zueinander versetzt. Zwischen den beiden Segmenten 2a, 2b ist wieder das Ausgleichselement 3 angeordnet, mit dem der translatorische Versatz 5 ausgleichbar ist und die beiden Segmente 2a, 2b verbindet. Das Ausgleichselement 3 ist hierbei wieder in dem Freiraum 6 (der hier wieder gefüllt gezeigt ist) angeordnet.

Figur 3b zeigt den verlorenen Formkern 1 aus der Figur 3a mit einem ausgeglichenen translatorischen Versatz 5. Die beiden Segmente 2a, 2b sind nun wieder axial zueinander angeordnet. Dabei weist das Ausgleichselement 3 im Wesentlichen eine Scherspannung auf, die dadurch entstanden ist, dass das Segment 2b gegen den translatorischen Versatz 5 der Figur 3a nach ober geschoben ist. Das Ausgleichselement verbindet weiterhin die beiden Segmente 2a, 2b.

Figur 4 zeigt einen weiteren Aspekt. Auf einer Außenfläche 17 eines Bauteils 15 sind Verstärkungselemente 16a-d angeordnet. Es ist problematisch, die Verstärkungselemente 16a-d auf ein hohles Bauteils 15 aufzupressen, da das Bauteil 15 selbst zusammengedrückt und somit beschädigt werden kann. In einem weiteren Aspekt ist während des Aufpressens der Verstärkungselemente 16a-d der Formkern 1 noch in dem Bauteil 15 angeordnet, so dass es nicht zusammengedrückt werden kann. Erst nach dem Aufpressen der Verstärkungselemente 16a-d wird der Formkern 1 ausgespült. Dabei kann der Formkern 1 alle Merkmale der vorhergehenden Beschreibung aufweisen. Insbesondere kann der Formkern 1 auch ein beschriebenes Ausgleichselement 3 aufweisen.

Die Verstärkungselemente 16a-d können beispielsweise Verstärkungsrippen und/oder eine Pressmasse sein.

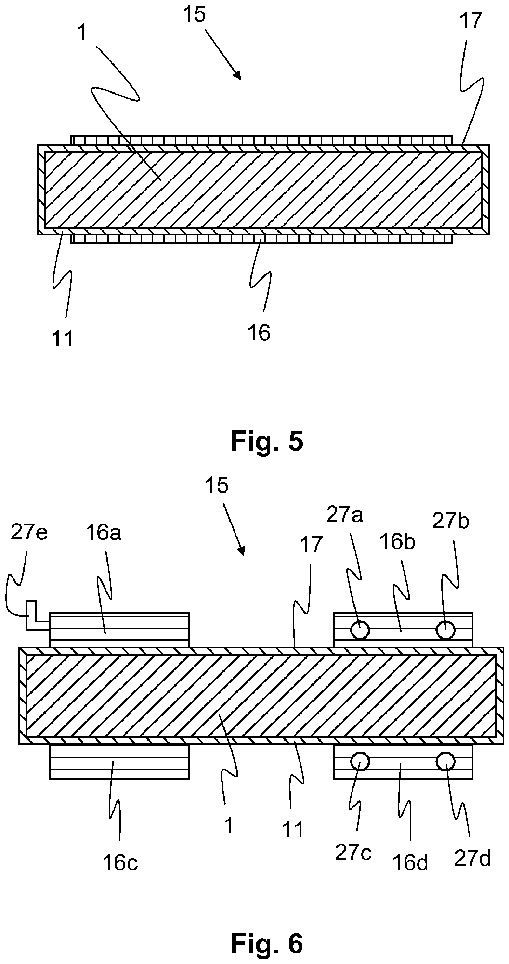

Figur 5 zeigt ein Ausführungsbeispiel, bei dem auf die Außenfläche 17 des Bauteils 15 das Verstärkungselement 16 aufgepresst ist. Das Verstärkungselement 16 ist in diesem Ausführungsbeispiel als Pressmasse ausgebildet, die zumindest auf Bereiche der Außenfläche 17 des Bauteils 15 aufgepresst ist. Die Pressmasse kann beispielsweise eine Mischung aus Verstärkungsfasern mit einer Matrix umfassen. Diese Mischung kann beispielsweise C-SMC sein. Die Pressmasse verleiht dabei dem Bauteil 15 eine Stabilität ohne dabei die Maße des Bauteils zu sehr zu vergrößern. Die Pressmasse kann dabei dünn aufgetragen sein.

Figur 6 zeigt ein weiteres Ausführungsbeispiel eines Bauteils 15 mit Verstärkungselementen 16a-d, die hier als Verstärkungsrippen ausgebildet sind. Die Verstärkungselemente 16a, b, d weisen hier Befestigungsmittel 27a-e auf, mittels denen ein weiteres Element an dem Bauteil 15 angeordnet und/oder das Bauteil 15 selbst an einem weiteren Element angeordnet werden kann. Die Befestigungsmittel 27a-d können beispielsweise Hülsen, Bohrungen und/oder Gewinde bzw. Gewindeeinsätze umfassen. Das Befestigungsmittel 27e ist als Haken ausgebildet.

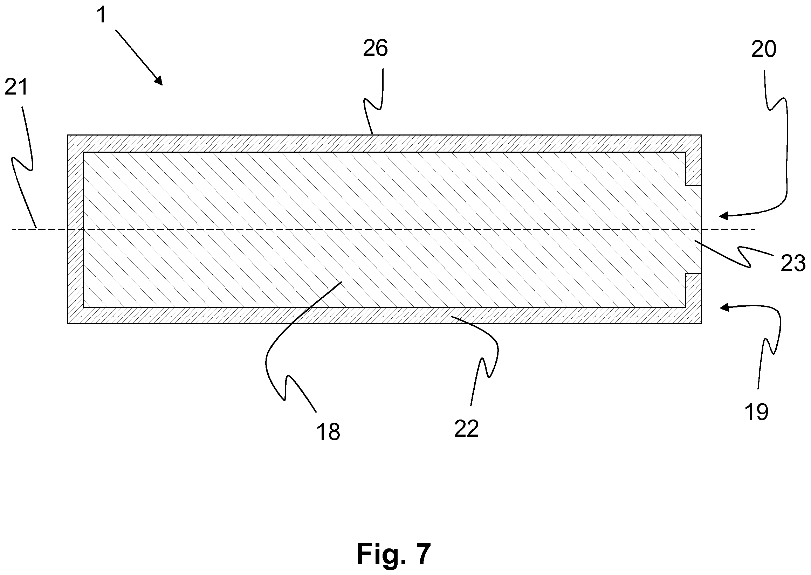

Figur 7 zeigt eine seitliche Schnittansicht eines verlorenen Formkerns 1 mit einer in einem Hüllenbereich 19 angeordneten harten Schale 22. Der Formkern 1 ist aus einem Granulat 18 ausgebildet, das zumindest teilweise mit einem Bindemittel verfestigt ist. In diesem Ausführungsbeispiel ist das Bindemittel nur im Hüllenbereich 19, der sich von einer Oberfläche 26 des Formkerns 1 in Richtung eines Kerns 20 des Formkerns 1 erstreckt, angeordnet, so dass er mit dem Granulat 18 die Schale 22 bildet. Das Granulat 18 im Kern 20 ist bindemittelfrei, so dass er unverfestigt ist. Der Kern 20 erstreckt sich dabei entlang einer Querschnittsmitte 21 des Formkerns 1. Das Granulat 18 im Kern 20 kann die Schale 22 abstützen, so dass die Oberfläche 26 des Formkerns 1 mit einen Druck beaufschlagt werden kann, ohne dass die Schale 22 beschädigt wird. Das Granulat 18 kann dabei lose und/oder komprimiert im Kern 20 angeordnet sein. Durch den unverfestigten Kern 20 kann das Granulat 18 besonders einfach nach der Herstellung des Bauteils aus diesem bzw. aus dem Formkern 1 entfernt werden.

Die Schale 22 kann dabei eine Dicke aufweisen, die zwischen 3% und 10% der Dicke des Formkerns 1 an der jeweiligen Stelle beträgt. Die Schale 22 kann auch eine Dicke von weniger als 5 mm aufweisen. Die Dicke der Schale 22 kann auch weniger als 2 mm sein.

Des Weiteren weist die Schale 22 eine Öffnung 23 auf, durch die, insbesondere nach der Herstellung des Bauteils 15, das Granulat 18 aus dem Bauteil 15 entfernt werden kann. Insbesondere das unverfestigte Granulat 18 kann besonders einfach aus der Öffnung 23 durch sein eigenes Gewicht heraus rieseln. Nachdem das Granulat 18 entfernt ist, kann die Schale 22 beispielsweise ausgespült und/oder zertrümmert werden und ebenfalls entfernt werden.

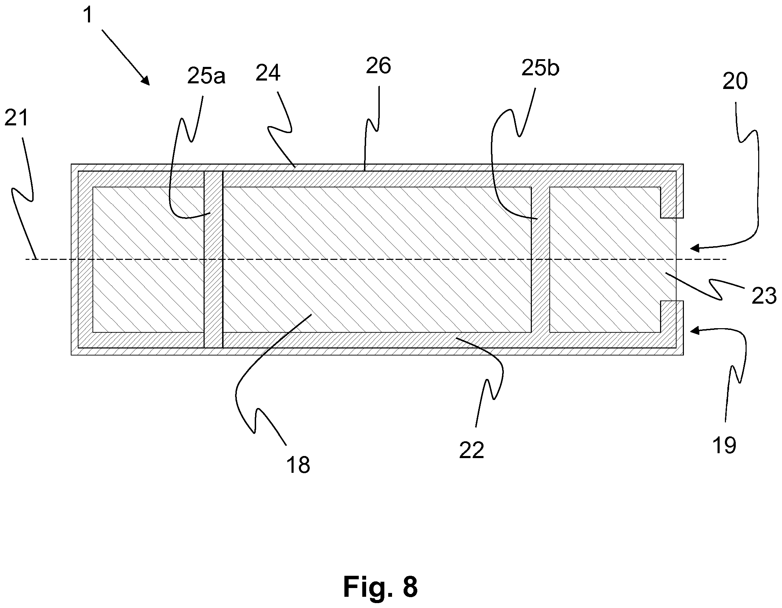

Figur 8 zeigt im Wesentlichen den gleichen Formkern 1 wie er in der Figur 7 gezeigt ist, so dass hier nur auf die Unterschiede eingegangen wird. Der Formkern 1 umfasst in diesem Ausführungsbeispiel eine Trennschicht 24. Mittels der Trennschicht 24 kann ein Eindiffundieren der Matrix in den Formkern 1 bzw. die Schale 22 während der Herstellung des Bauteils verhindert werden. Ein Nachteil des Eindiffundierens ist es, dass die Schale 22 und/oder das Granulat 18 nicht mehr bzw. nur noch schlecht aus dem Bauteil entfernt werden kann. Dies kann mit der Trennschicht 24 verhindert werden.

Die Trennschicht 24 ist hier auf der Oberfläche 26 der Schale 22 aufgetragen.

Ferner weist der Formkern 1 in diesem Ausführungsbeispiel der Figur 8 zwei Verstärkungsstreben 25a, 25b auf. Diese erstrecken sich durch den Formkern 1 hindurch von einer Seite des Formkerns 1 auf gegenüberliegende Seite des Formkerns 1. Dabei erstreckt sich die Verstärkungsstrebe 25a durch die Schale 22 hindurch und reicht somit von einem Abschnitt der Oberfläche 26 des Formkerns 1 zu einem gegenüberliegenden Abschnitt der Oberfläche 26. Die Schale 22 ist somit zu der Verstärkungsstrebe 25a benachbart und kann mit dieser verbunden sein. Die Verstärkungsstrebe 25b ist dagegen an der Schale 22 angeordnet und erstreckt sich zwischen der Schale 22 durch das Granulat 18.

Die vorliegende Erfindung ist nicht auf die dargestellten und beschriebenen Ausführungsbeispiele beschränkt. Abwandlungen im Rahmen der Patentansprüche sind ebenso möglich wie eine Kombination der Merkmale, auch wenn diese in unterschiedlichen Ausführungsbeispielen dargestellt und beschrieben sind.

### Bezugszeichenliste

- 1: verlorener Formkern
- 2: Segment
- 3: Ausgleichselement
- 4: rotatorischer Versatz
- 5: translatorischer Versatz
- 6: Freiraum
- 7: Verbindungsbereich
- 8: Dehnungsbereich
- 9: Stauchungsbereich
- 10: Formwerkzeug
- 11: Verstärkungsfasern
- 12: Gelenkverbindung
- 13: Kugelkopf
- 14: Kugelpfanne
- 15: Bauteil
- 16: Verstärkungselement
- 17: Außenfläche
- 18: Granulat
- 19: Hüllenbereich
- 20: Kern
- 21: Querschnittsmitte
- 22: Schale
- 23: Öffnung
- 24: Trennschicht
- 25: Verstärkungsstrebe
- 26: Oberfläche
- 27: Befestigungsmittel

## Patentansprüche

1. Verlorener Formkern zur Herstellung eines faserverstärkten Bauteils (15)
mit einem harten Stützkern, der aus einem Granulat (18), insbesondere einem mineralischen Grundstoff, Glas, Keramik und/oder Sand, und einem Bindemittel hergestellt ist,
**dadurch gekennzeichnet,**
**dass** der Stützkern eine durch das Bindemittel und das Granulat (18) ausgebildete harte Schale (22) und
einen durch das Granulat (18) ausgebildeten bindemittelfreien inneren Kern (20) aufweist.

2. Verlorener Formkern nach dem vorherigen Anspruch, **dadurch gekennzeichnet, dass** das Granulat (18) des inneren Kerns (20) lose und/oder komprimiert ist, so dass die einzelnen Granulatkörner eng aneinander anliegen.

3. Verlorener Formkern nach einem oder mehreren der vorherigen Ansprüche, **dadurch gekennzeichnet, dass** der Stützkern in einem Rapid-Prototyping-Verfahren hergestellt, insbesondere gedruckt, ist.

4. Verlorener Formkern nach einem oder mehreren der vorherigen Ansprüche, **dadurch gekennzeichnet, dass** eine Konzentration des Bindemittels von einer Außenfläche des Stützkerns in Richtung seines Inneren, insbesondere von 100% bis 0%, abnimmt.

5. Verlorener Formkern nach einem oder mehreren der vorherigen Ansprüche, **dadurch gekennzeichnet, dass** die Schale (22) eine Dicke von weniger als 5 mm, insbesondere von weniger als 2 mm, aufweist.

6. Verlorener Formkern nach einem oder mehreren der vorherigen Ansprüche, **dadurch gekennzeichnet, dass** der Formkern (1) eine, insbesondere elastische, Trennschicht (24), vorzugsweise eine Silikon- und/oder eine Kunststoffschicht, aufweist, die den Stützkern nach außen versiegelt.

7. Verlorener Formkern nach einem oder mehreren der vorherigen Ansprüche, **dadurch gekennzeichnet, dass** das Bindemittel und/oder die Trennschicht (24) mittels eines Lösungsmittels, insbesondere einer Säure, Base, Wasser und/oder Alkohol, löslich sind, so dass diese nach der Herstellung des faserverstärkten Bauteils (15) aus diesem ausspülbar sind.

8. Verlorener Formkern nach einem oder mehreren der vorherigen Ansprüche, **dadurch gekennzeichnet, dass** die Schale (22) zumindest einen Öffnungsbereich aufweist, in dem die Schale (22) zur Ausbildung einer Öffnung (23) aufbrechbar ist und/oder eine Öffnung (23) aufweist, durch die der lose Kern (20) nach der Herstellung des faserverstärkten Bauteils (15) herausrieseln kann und/oder über die die Schale (22) mit dem Lösungsmittel ausspülbar ist.

9. Verfahren zur Herstellung eines faserverstärkten Bauteils (15), bei welchem Verstärkungsfasern (11), insbesondere als Gewebe, Gelege und/oder Geflecht, zusammen mit einer Matrix auf einem verlorenen Formkern (1) angeordnet werden und die Matrix in einem Formwerkzeug (10) mittels Temperatur- und/oder Druckerhöhung angehärtet und/oder ausgehärtet wird, und wobei ein Formkern (1) gemäß einem oder mehreren der vorherigen Ansprüche verwendet wird, der eine harte Schale (22) und einen bindemittelfreien Kern (20) umfasst, und der Kern (20) nach der Herstellung des faserverstärkten Bauteils (15) aus der Schale (22) entfernt, insbesondere herausgespült und/oder herausgeschüttet, wird.

10. Verfahren nach dem vorherigen Anspruch, **dadurch gekennzeichnet, dass** die Schale (22) nach dem Herausschütten des Kerns (20) mittels eines Lösungsmittels ausgespült wird.

## Claims

1. A disposable mold core for producing a fiber-reinforced component (15), the disposable mold core comprising:
a hard support core, manufactured from a granulate (18), especially from a mineral base material, glass, ceramic, and/or sand, and a binder,
**characterized in that**,
the support core has a hard shell (22) developed by the binder and the granulate (18) and
a binder-free inner core (20) developed by the granulate (18).

2. The disposable mold core according to the previous claim, **characterized in that**, the granulate (18) of the inner core (20) is loose and/or compressed, so that the individual granulate grains lie next to one another.

3. The disposable mold core according to one or several of the previous claims, **characterized in that**, the support core is manufactured in a rapid prototyping process, especially printed.

4. The disposable mold core according to one or several of the previous claims, **characterized in that**, a binder concentration decreases from an outer surface of the support core towards its interior, especially from 100% to 0%.

5. The disposable mold core according to one or several of the previous claims, **characterized in that**, the shell (22) is less than 5 mm, especially less than 2 mm, thick.

6. The disposable mold core according to one or several of the previous claims, **characterized in that**, the mold core (1) has, an especially elastic, separating layer (24), preferably a silicon and/or plastic layer, which seals off the support core towards the exterior.

7. The disposable mold core according to one or several of the previous claims, **characterized in that**, the binder and/or separating layer (24) can be dissolved with a solvent, especially an acid, a base, water and/or alcohol, so that it can be rinsed off the fiber-reinforced component (15) after it has been manufactured.

8. The disposable mold core according to one or several of the previous claims, **characterized in that**, the shell (22) has at least one opening area, in which the shell (22) can be broken up to create an opening (23) and/or has an opening (23) through which the loose core (20) can trickle out after the fiber-reinforced component (15) is manufactured and/or can be rinsed off with the solvent through the shell (22).

9. A method of producing a fiber-reinforced component (15)
arranging together reinforcement fibers (11), particularly as woven fabric, non-crimp fabric and/or braided fabric, with a matrix on a disposable mold core (1) and
hardening and/or fully hardening the matrix in a molding tool (10) by increasing the temperature and/or pressure and
using a mold core (1) according to one or several of the preceding claims, which includes a hard shell (22) and a binder-free core (20), and the core (20) is removed from the shell (22), especially rinsed off and/or shaken out, after the fiber-reinforced component (15) is manufactured.

10. The method according to the preceding claim, **characterized in that**, the shell (22) is rinsed off with a solvent after the core (20) is shaken out.

## Revendications

1. Noyau de moulage perdu pour la fabrication d'un composant (15) renforcés par des fibres,
avec un noyau de soutien dur qui est fabriqué à partir d'un granulat (18), en particulier d'un matériau de base minéral, de verre, de céramique et/ou de sable, et d'un liant,
**caractérisé en ce que**
le noyau de soutien comprend une coque dure (22) formée par le liant et le granulat (18), et
présente un noyau intérieur (20) exempt de liant, formé par le granulat (18).

2. Noyau de moulage perdu selon la revendication précédente, **caractérisé en ce que** le granulat (18) du noyau intérieur (20) est en vrac et/ou comprimé, de sorte que les grains granulés individuels sont en appui les uns contre les autres.

3. Noyau de moulage perdu selon l'une quelconque ou plusieurs des revendications précédentes, **caractérisé en ce que** le noyau de soutien est fabriqué, en particulier imprimé, dans un procédé de prototypage rapide.

4. Noyau de moulage perdu selon l'une quelconque ou plusieurs des revendications précédentes, **caractérisé en ce qu'**une concentration du liant diminue d'une surface extérieure du noyau de soutien vers son intérieur, en particulier de 100% à 0%.

5. Noyau de moulage perdu selon l'une quelconque ou plusieurs des revendications précédentes, **caractérisé en ce que** la coque (22) présente une épaisseur de moins de 5 mm, en particulier de moins de 2 mm.

6. Noyau de moulage perdu selon l'une quelconque ou plusieurs des revendications précédentes, **caractérisé en ce que** le noyau de moulage (1) présente une couche de démoulage (24), en particulier élastique, de préférence une couche de silicone et/ou de matière plastique, qui scelle le noyau de soutien vers l'extérieur.

7. Noyau de moulage perdu selon l'une quelconque ou plusieurs des revendications précédentes, **caractérisé en ce que** le liant et/ou la couche de démoulage (24) sont solubles au moyen d'un solvant, en particulier un acide, une base, de l'eau et/ou un alcool, de sorte que ces derniers peuvent être éliminés par rinçage après la fabrication du composant (15) renforcés par des fibres.

8. Noyau de moulage perdu selon l'une quelconque ou plusieurs des revendications précédentes, **caractérisé en ce que** la coque (22) présente au moins une zone d'ouverture dans laquelle la coque (22) peut être brisée pour former une ouverture (23) et/ou une ouverture (23) à travers laquelle le noyau libre (20) peut ruisseler vers l'extérieur après la fabrication du composant (15) renforcés par des fibres et/ou par laquelle la coque (22) peut être rincée avec le solvant.

9. Procédé pour la fabrication d'un composant (15) renforcés par des fibres, dans lequel des fibres de renforcement (11), en particulier sous forme de tissu, de non-tissé et/ou de tresse, sont disposées conjointement avec une matrice sur un noyau de moulage perdu (1) et la matrice est durcie préliminairement et/ou durcie dans un moule (10) par augmentation de la température et/ou de la pression,
et dans lequel
un noyau de moulage (1) selon l'une quelconque ou plusieurs des revendications précédentes est utilisé, qui comprend une coque dure (22) et un noyau (20) exempt de liant, et le noyau (20) est éliminé de la coquille (22), en particulier par rinçage et/ou par déversement, après la fabrication du composant (15) renforcés par des fibres.

10. Procédé selon la revendication précédente, **caractérisé en ce que** la coque (22) est rincée au moyen d'un solvant après le déversement du noyau (20).
